Europäisches Patentamt

(19) European Patent Office

Office européen des brevets

(11) Numéro de publication: **0 230 839**
**B1**

---

(12) **FASCICULE DE BREVET EUROPEEN**

---

(45) Date de publication du fascicule du brevet:
04.04.90

(21) Numéro de dépôt: **86420261.9**

(22) Date de dépôt: **23.10.86**

(51) Int. Cl.⁴: **B62K 21/02**, B62K 19/16,
B29C 67/14

---

(54) **Fourche de bicyclette ou article similaire à base d'une résine renforcée par une structure textile et procédé pour sa fabrication.**

---

(30) Priorité: **29.10.85 FR 8516258**

(43) Date de publication de la demande:
**05.08.87 Bulletin 87/32**

(45) Mention de la délivrance du brevet:
**04.04.90 Bulletin 90/14**

(84) Etats contractants désignés:
**BE CH DE ES GB IT LI NL SE**

(56) Documents cités:
**FR-A- 2 308 543**
**FR-A- 2 462 266**
**FR-A- 2 546 473**
**US-A- 4 029 172**

(73) Titulaire: **TECHNIQUE DU VERRE TISSE S.A., 12 Rue Malesherbes, F-69006 Lyon(FR)**

(72) Inventeur: **Foret, Régis, "Le Gourd", F-69290 Brindas(FR)**

(74) Mandataire: **Laurent, Michel et al, Cabinet LAURENT et GUERRE B.P. 32, F-69131 Ecully Cedex(FR)**

---

ACTORUM AG

## Description

La présente invention concerne une forche de bicyclette, ou tout autre article similaire comportant deux branches reliées à un tronc commun, à base d'un matériau stratifié constitué d'une résine renforcée par une armature textile ; elle concerne également un procédé permettant l'btention d'une telle fourche.

Dans la demande de brevet français 83.08 864 (publication 2 546 473), le Demandeur a décrit un nouveau type de cadre de bicyclette à base d'un matériau tubulaire constitué d'une résine renforcée par une armature textile, formée d'une superposition de gaines tressées. Les différents éléments tubulaires de section cylindrique ou conique sont assemblés entre eux au moyen de manchons.

Compte-tenu des avantages apportés par un tel matériau et afin d'obtenir une bicyclette homogène, il aurait pu être envisagé de réaliser d'une manière similaire la fourche. La réalisation de cet élément, qui se compose essentiellement de deux branches (ou fourreaux) profilées aux extrémités desquelles est fixée la roue, d'une tête reliant les deux branches et d'un pivot cylindrique prolongeant la tête et sur lequel est fixé le guidon, en appliquant les enseignements du brevet précité, ne donne cependant pas satisfaction compte-tenu des problèmes techniques délicats à surmonter, tels que par exemple :
- la difficulté d'avoir une symétrie parfaite entre les deux fourreaux (ou branches) de la fourche ;
- la présence d'une zone de faiblesse au niveau de la jonction entre les fourreaux et la tête alors que c'est cette zone qui est soumise aux contraintes mécaniques les plus élevées.

Pour surmonter ces inconvénients, il aurait pu être envisagé de réaliser le raccordement des fourreaux et de la tête par surmoulage ou par collage. Des essais réalisés dans ce sens ont cependant permis de constater que même en choisissant des résines connues pour leur très bonne résistance mécanique, tels que par exemple des composés à base de résines polyester ou epoxy chargées de fibres de verre, il n'était pas possible d'obtenir une fourche donnant satisfaction par le fait que l'on constate:
- une manque d'homogénéité au niveau de la jonction qui résulte d'une mauvaise répartition des fibres coupées dans la structure de la pièce;
- un fluage important par suite des sollicitations mécaniques;
- une résistance à la fatigue des pièces très faible;
- la nécessité d'avoir un surdimensionnement pour compenser un module d'élasticité très faible.

L'invention permet de résoudre ces problèmes et concerne un nouveau type de fourche dans lequel le pivot, la tête et les deux fourreaux sont réalisés en une seule pièce, obtenus directement par moulage, cette fourche étant non seulement très légère mais présentant également de très bonnes caractéristiques de tenue en fatigue et de résistance aux contraintes flexion/cisaillement.

D'une manière générale, le nouveau type de fourche conforme à l'invention est à base d'une résine renforcée par une armature textile, disposée autour d'un noyau préalablement formé, ayant la configuration de la fourche à réaliser et des dimensions légèrement inférieures à celle-ci pour tenir compte de l'épaisseur des renforts qui seront disposés autour de ce noyau, cette armature étant constituée d'une superposition de gaines tressées, caractérisée en ce que:
- ladite fourche se présente sous la forme d'un ensemble moulé en une seule pièce formant le pivot (7), la tête de fourche (8) ainsi que les deux fourreaux (6a, 6b);
- des fils longitudinaux (10) sont emprisonnés entre les gaines tressées disposées autour du noyau, ces fils s'étendant parallèlement aux génératrices de ladite fourche et étant répartis régulièrement sur toute la périphérie du noyau définissant la fourche et ce, aussi bien autour des fourreaux (6a, 6b) qu'autour de la tête de fourche (8) que du pivot de direction (7).

Selon une forme de réalisation conforme à l'invention, le noyau définissant la fourche est monobloc alors que selon une variante, ledit noyau est constitué de deux demi-noyaux, correspondant chacun à une demi-fourche passant, soit par le plan de symétrie de l'axe de la tête et du pivot soit, selon un plan transversal, divisant les fourreaux (branches), la tête et le pivot en deux parties complémentaires; dans un tel mode de réalisation comportant deux demi-noyaux, les renforts textiles sont disposés non seulement sur la périphérie mais également le long de la zone de jonction entre les deux demi-noyaux, ce qui crée une cloison améliorant encore la résistance, et plus particulièrement dans le cas où les deux demi-noyaux sont réalisés dans un plan transversal passant par les fourreaux.

L'invention concerne également un procédé permettant la réalisation d'une telle fourche.

D'une manière générale, le procédé conforme à l'invention consiste à recouvrir un noyau préalablement formé, ayant la configuration de la fourche à réaliser et des dimensions légèrement inférieures pour tenir compte de l'épaisseur des renforts qui sont disposés autour de ce noyau au moyen de tresses unidirectionnelles et bidirectionnelles préalablement fabriquées, le procédé selon l'invention se caractérisant en ce que lors de la mise en place desdites tresses autour du noyau, il est impératif:
- qu'elles recouvrent non seulement la tête de fourche mais également qu'elles remontent sur au moins une partie de la hauteur du pivot ;
- qu'elles emprisonnent, aussi bien le fourreaux (6a, 6b) que la tête de fourche (8) et le pivot de direction (7);
- qu'après mise en place des différentes tresses de renforcement le long des fourreaux, de la tête et du pivot, ce dernier soit recouvert d'un manchon également constitué de tresses uni et bidirectionnelles emprisonnant l'ensemble des couches préalablement disposées autour du noyau.

Selon une première forme de mise en oeuvre conforme à l'invention, la fourche est obtenue à partir d'un noyau monobloc. Dans ce cas, les fils longitudinaux qui recouvrent le pivot, la tête et l'amorce des fourreaux sont préalablement disposés autour de ces zones et sont maintenus plaqués contre le noyau par au moins une couche d'une tresse bidirectionnelle, les branches étant ensuite réalisées, également au moyen de tresses bi et unidirectionnelles en prenant soin de faire remonter leurs extrémités le long de la tête et d'une partie de la hauteur du pivot de telle sorte qu'elles se recouvrent mutuellement dans la zone de jonction en-dessous de la tête.

Selon la forme de mise en oeuvre selon l'invention selon laquelle la fourche est réalisée à partir de deux demi-noyaux correspondant soit à une demi-fourche coupée selon le plan de symétrie passant par l'axe du pivot, soit à une demi-fourche coupée selon un plan transversal passant à la fois par l'axe du pivot et par un plan commun aux deux branches, les différentes couches de renfort textile constituées également de tresses unidirectionnelles et bidirectionnelles sont dans un premier temps disposées autour de chacun des deux demi-noyaux puis, les deux demi-noyaux ainsi revêtus sont alors juxtaposés pour être à nouveau recouverts d'une succession de couches unidirectionnelles et bidirectionnelles qui, non seulement assurent le maintien des deux demi-noyaux lors de l'opération de moulage proprement dite mais également donnent des caractéristiques mécaniques définitives à ladite fourche.

Dans un tel mode de réalisation comportant deux demi-noyaux, on obtient un cloisonnement interne renforçant encore la structure et ce, plus particulièrement dans le cas où les deux demi-noyaux sont réalisés dans un plan transversal passant par les deux fourreaux et le pivot.

L'invention et les avantages qu'elle apporte seront cependant mieux compris grâce aux exemples de réalisation donnés ci-après à titre indicatif et non limitatif et qui sont illustrés par les schémas annexés dans lesquels :

- la figure 1 est une vue partielle, en perspective, d'une bicyclette comportant une fourche réalisée conformément à l'invention ;

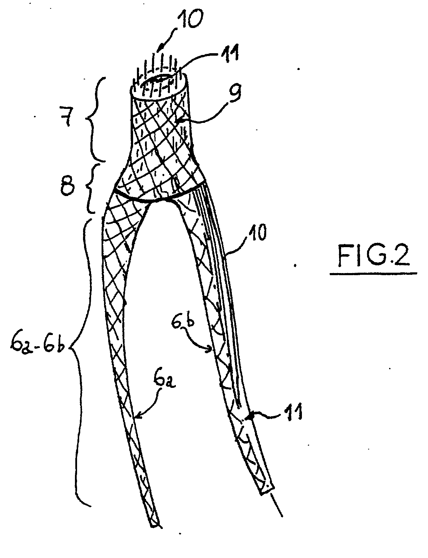

- la figure 2 est une vue en perspective, partiellement coupée, de la préforme d'une fourche conforme à l'invention avant moulage final ;
- les figures 3a à 3e illustrent les différentes phases d'un premier mode de réalisation permettant de réaliser une préforme pour l'obtention d'une fourche conforme à l'invention, à partir d'un noyau en une seule pièce ;
- les figures 4a à 4c sont des vues schématiques, partielles et en perspective, illustrant les différentes phases de réalisation d'une préforme à partir de deux demi-noyaux juxtaposables selon le plan Y transversal passant par l'axe du pivot et les deux fourreaux de la fourche ;
- la figure 5 illustre la réalisation d'une préforme pour l'obtention d'une fourche conforme à l'invention à partir de deux demi-noyaux passant par le plan de symétrie X longitudinal entre les branches.

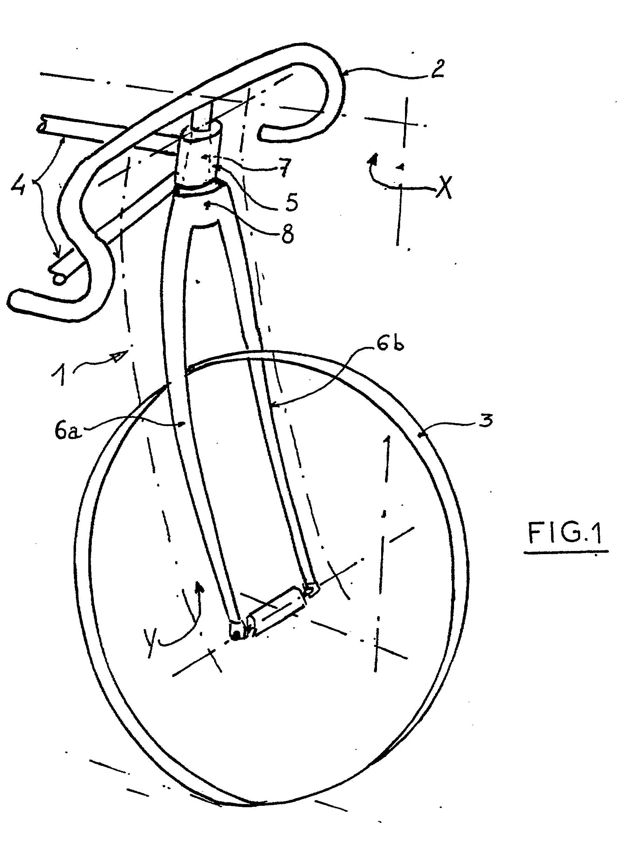

Ainsi que cela ressort de la figure 1, dans une bicyclette, la fourche (1), qui supporte le guidon (2) et la roue avant (3), est montée sur le cadre proprement dit (4) à l'intérieur du tube de direction (5). Une telle fourche (1) est constituée essentiellement de trois parties principales, à savoir les deux fourreaux (6a,6b) (ou branches) entre lesquels est montée la roue (3), d'un pivot (7) disposé à l'intérieur du tube de direction (5) et à l'extrémité duquel est fixé le guidon (2), les deux fourreaux (6a,6b) et le pivot (7) étant réunis entre eux par une zone de jonction (8) dite "tête".

A ce jour, les éléments formant la fourche sont assemblées entre eux soit par soudure dans le cas d'une fourche en acier, soit éventuellement par collage dans le cas de fourche à base d'autres matériaux non soudables tels que par exemple en duraluminium ou en matériaux composites à base de résines renforcées par une structure textile, un tel collage nécessitant en général la présence d'inserts de raccordement entre les différents éléments.

Contrairement aux solutions antérieures, la fourche selon l'invention est réalisée en une seule pièce, obtenue par moulage d'une résine renforcée par une armature textile disposée autour d'un noyau préalablement formé, ayant la configuration de la fourche à réaliser et des dimensions légèrement inférieures à celle-ci pour tenir compte de l'épaisseur des renforts textiles qui seront disposés autour de lui. Conformément à l'invention, une superposition de couches comportant, d'une part, des fils (9) disposés circonférentiellement et en biais par rapport aux génératrices de la fourche et, d'autre part et surtout, des fils longitudinaux (10), disposés parallèlement aux génératrices, sur toute la périphérie des différentes parties de la fourche, c'est-à-dire aussi bien autour des fourreaux (6a,6b) qu'autour de la tête de fourche (8) que du pivot de direction (7).

Comme matériaux textiles de base permettant d'obtenir une telle répartition et disposition des filaments de renforcement de la résine, on utilisera de préférence des gaines tressées bidirectionnelles pour les fils (9) destinés à être répartis circonférentiellement par rapport aux génératrices et, pour les fils (10) destinés à être disposés parallèlement aux génératrices, des tresses unidirectionnelles, c'est-à-dire des tresses constituées pour partie majoritaire de fils parallèles liés entre eux par des fils très fins, avantageusement extensibles, tels que des fils texturés, le liage permettant un glissement desdits fils longitudinaux (10) les uns par rapport aux autres afin d'en faciliter la mise en place comme cela sera vu dans la suite de la description. Comme fils constituant de telles tresses, on utilisera tout fil normalement employé pour la réalisation de matériaux stratifiés mais, de préférence, des fils à base de carbone, des fils à base de polyamide tels que ceux commercialisés sous la marque "KEVLAR", chaque série de fils pouvant être soit à base des fils d'une même nature soit à base d'une combinaison de fils de nature différente telle que par exemple une alternance de fils de carbone et de fils de "KEVLAR". Bien entendu, tout autre type de fil présentant des caractéristiques mécaniques appropriées ainsi que tout autre type de résine pourrait être également utilisé.

Un tel type de fourche est réalisé selon un procédé qui fait également partie de l'invention. Un tel procédé consiste à réaliser, avant moulage, une structure textile de renforcement autour d'un noyau ayant la forme de la fourche finale et dans laquelle les fils de renforcement sont positionnés de la manière précitée.

Pour ce faire, différentes solutions sont possibles.

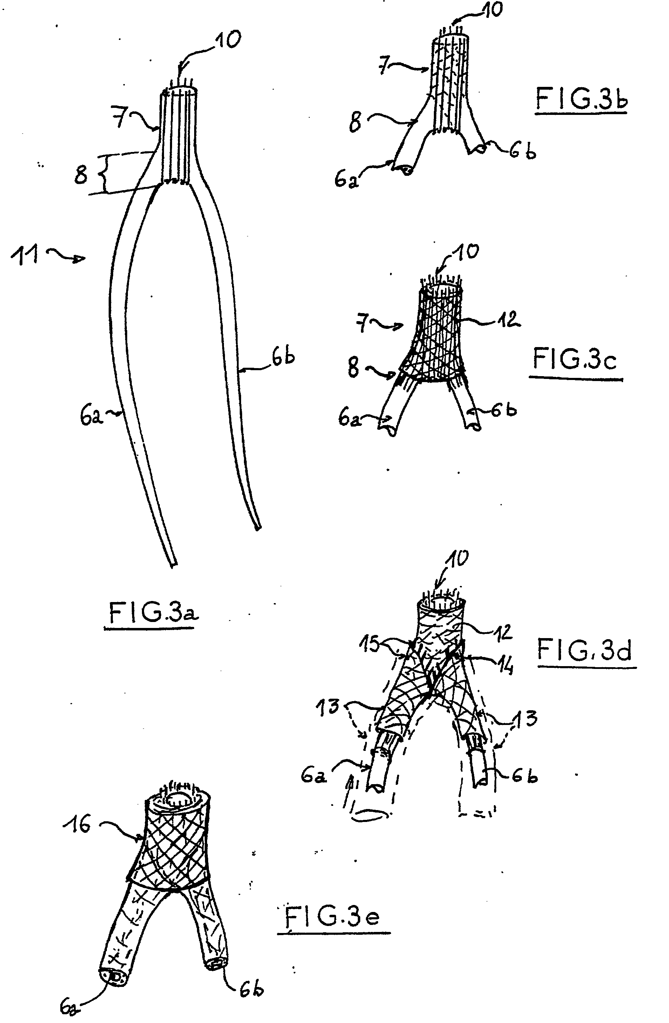

Selon un premier mode de mise en oeuvre, qui est illustré par les figures 3a à 3d, on réalise dans un premier moule, un noyau désigné par la référence générale (11), dans un matériau cellulaire genre mousses de polyuréthane rigides ou semi-rigides. Les dimensions de ce noyau seront bien entendu réduites par rapport aux dimensions finales de la fourche et ce, en fonction du nombre de couches de renforts textiles.

Les différentes parties de ce noyau (11) correspondant aux différentes parties de la fourche seront dans la suite de la description, désignées par les mêmes références (6a,6b,7 et 8) que celles utilisées pour la fourche elle-même.

Afin d'obtenir la répartition appropriée des fils de renforcement, on procède de la manière suivante.

Dans un premier temps, ainsi que cela ressort des figures 3a et 3b, on dispose le long du pivot (7) une bande de fils longitudinaux (10), constituée par un ruban tressé undirectionnel, de manière à venir envelopper l'avant et l'arrière du pivot (7) en passant sous la tête de fourche (8). Cela étant fait, on enfile autour du pivot (7) (voir figure 3c) une succession de couches (12) de tresses bidirectionnelles et unidirectionnelles. La longueur de ces tresses bidirectionnelles et unidirectionnelles est telle que l'on arrive sensiblement au niveau de la jonction des fourreaux (6a,6b) avec la tête de fourche (8). Lors de la mise en place des tresses undirectionnelles, on prend soin cependant de faire glisser légèrement les fils longitudinaux (10) de ces tresses pour qu'elles viennent s'appliquer sur l'amorce des fourreaux (6a,6b). En général, on réalise un empilement (12) comportant au moins une tresse unidirectionnelle et une tresse bidirectionnelle. De cette manière, la totalité de la périphérie du pivot (7) se trouve donc recouverte de fils disposés à la fois circonférentiellement et longitudinalement.

Les parties (7) et (8) du noyau correspondant au pivot et à la tête étant ainsi recouvertes d'une structure de renforcement, on procède alors au recouvrement des fourreaux (6a,6b). Ce recouvrement est réalisé en enfilant alternativement sur chacun des fourreaux (6a,6b) (voir figure 3d), une succession de tresses (13) unidirectionnelles et bidirectionnelles. Afin d'obtenir la forme profilée des fourreaux (6a,6b),les différentes couches superposées ont une longueur croissante. Par ailleurs, lors de la mise en place, on prend soin, ainsi que cela est illustré à la figure 3d, de faire entrecroiser les extrémités (14) des tresses dans la partie située sous la tête (8) de la fourche afin de la recouvrir entièrement et de faire remonter l'extrémité (15) des fils longitudinaux le long du pivot (7). Les fourreaux (6a,6b) étant ainsi formés, on procède alors à la finition du pivot (7) (voir figure 3a), une succession de couches (16) de tresses unidirectionnelles et de tresses bidirectionnelles jusqu'à obtention du diamètre extérieur du pivot (7).

La préforme ainsi réalisée est ensuite introduite dans un second moule qui est aux dimensions finales de la fourche et où l'opération de moulage proprement dite est réalisée. Le processus de moulage est un processus conventionnel qui consiste après fermeture du moule et mise sous presse à préchauffer ledit moule à environ 55°C. Cela étant fait, on injecte de la résine, résine epoxy par exemple, à l'intérieur du moule et l'on monte en température jusqu'à 90-130°C suivant la résine utilisée. Après polymérisation et refroidissement, on procède au démoulage. La pièce est ensuite ébarbée, les extrémités des fourreaux (6a,6b) coupés et évidés pour permettre la mise en place des pattes de fixation de la roue (3). Le pivot central (7) est coupé à la hauteur souhaitée et est usiné de manière à permettre la mise en place du tube fileté de fixation du guidon (2).

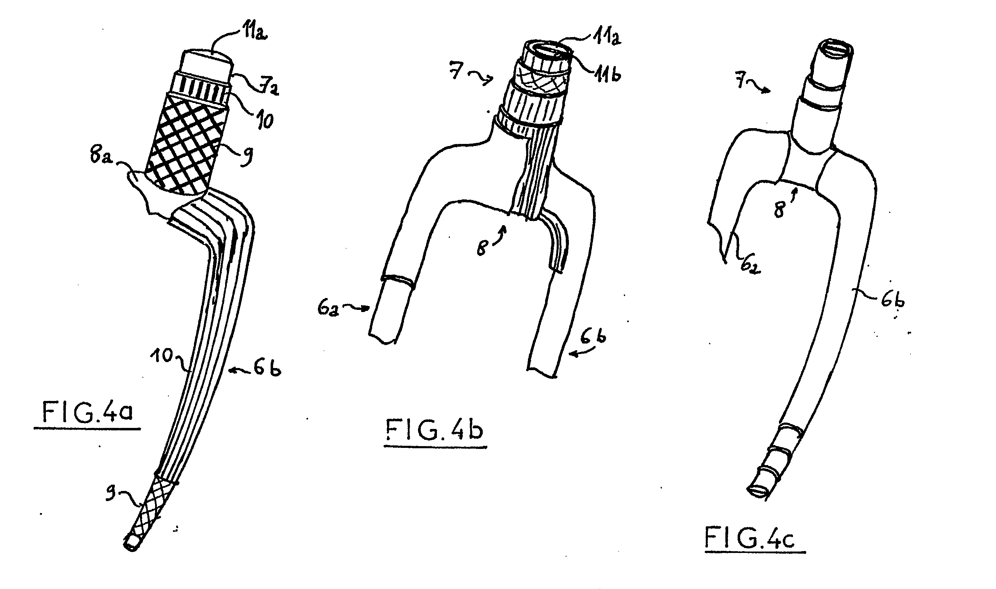

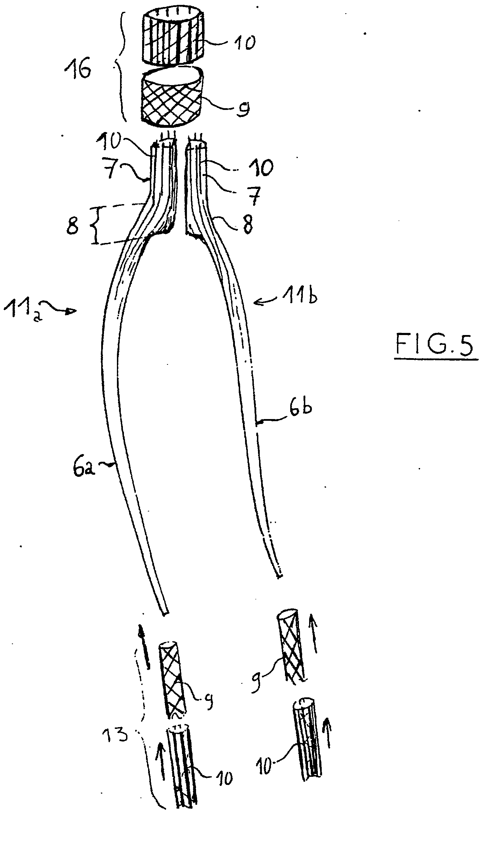

Le procédé conforme à l'invention peut également être mis en oeuvre en réalisant la préforme constituée du noyau recouvert des structures textiles de renforcement à partir d'un noyau (11) non pas monobloc mais à partir de deux demi-noyaux (11a, 11b) correspondant soit à une demi-fourche coupée selon un plan transversal Y passant à la fois par l'axe du pivot et par le plan commun aux deux branches (exemple illustré par les figures 4a à 4c), soit à une demi-fourche coupée selon le plan de symétrie X longitudinal entre les branches (6a,6b) (exemple illustré par la figure 5).

Dans ces variantes, la mise en place des structures textiles de renforcement autour des noyaux est réalisée de la manière suivante.

Lorsque les demi-noyaux (11a,11b) correspondent à une demi-fourche coupée selon un plan transversal passant à la fois par l'axe du pivot et par un plan commun aux deux branches (6a,6b), exemples illustrés par les figures 4a à 4c , dans un premier temps (figure 4a), on dispose autour de chacun des deux demi-noyaux (11a) et (11b) une succession de tresses uni et bidirectionnelles. Pour ce faire, on commence par recouvrir le pivot d'au moins une couche de tresses comportant des fils longitudinaux (10) (tresse unidirectionnelle) et d'une tresse bidirectionnelle comportant des fils circonférentiels (9). Cela étant fait, chacune des deux demi-jambes (6a,6b) est également recouverte d'un empilement de tresses unidirectionnelle (10) et bidirectionnelle (9). De cette manière, la totalité de la périphérie du demi-pivot (7a) et de la tête (8a) et des branches (6a,6b) se trouve recouverte de fils disposés à la fois circonférentiellement et longitudinalement.

Les deux demi-fourches étant ainsi réalisées, on les juxtapose (voir figure 4b) et on réalise alors d'une manière similaire à l'exemple de réalisation illustré aux figures 3b et 3c, le renfort extérieur du pivot et de la tête de fourche également en superposant des tresses uni et bidirectionnelles.

La tête de fourche (8) et le pivot (7) étant ainsi revêtus, on réalise alors des renforts textiles des deux fourreaux (6a,6b) en les recouvrant de tresses uni et bidirectionnelles de longueur croissante (voir figure 4c) en prenant soin de les faire remonter le long de la tête de fourche et du pivot d'une manière similaire à ce qui est illustré à la figure 3d.

Le moule final de la préforme ainsi réalisée est réalisée d'une manière similaire au cas où le noyau est monobloc. Par rapport à une fourche comportant un noyau monobloc, une telle solution permet d'obtenir un cloisonnement interne entre les deux demi-fourches, cloisonnement qui comporte à la fois des fils longitudinaux et des fils disposés en biais et qui permet d'augmenter notablement les caractéristiques mécaniques de la fourche, notamment sa rigidité.

Dans la forme de réalisation illustrée par la figure 5, on utilise également pour réaliser la fourche conforme à l'invention deux demi-noyaux (11a) et (11b), ces deux demi-noyaux correspondant chacun à une demi-fourche coupée selon le plan de symétrie X passant par l'axe du pivot. Dans cette variante, la superposition des éléments bidirectionnels et unidirectionnels afin d'obtenir la configuration de la structure textile de renforcement conformément à l'invention est réalisée à partir d'un empilement (13) de tresses (9,10). Les tresses ont des longueurs croissantes depuis le pivot (7) jusqu'aux extrémités des fourreaux (6a,6b). Lorsque les demi-fourches sont ainsi revêtues du nombre de couches textiles (13) souhaitées, on les juxtapose comme à l'exemple précédent et on dispose alors autour du pivot (7) une superposition (16) de tresses unidirectionnelle (10) et bidirectionnelle (9) jusqu'à obtention du diamètre final du pivot. La préforme ainsi réalisée est ensuite traitée de manière similaire aux exemples précédents.

Par rapport aux exemples précédents, une telle solution permet de simplifier le processus de fabrication et d'avoir une bonne répartition des fils sur toute la périphérie de la fourche sans avoir à faire chevaucher les extrémités des gaines tressées. En revanche, un tel processus implique un soin particulier lors de l'assemblage des deux demi-fourches pour obtenir une symétrie parfaite. Enfin, bien que l'on obtienne un cloisonnement interne renforcé entre les deux demi-fourches, la résistance est moins bonne que dans le mode de réalisation faisant l'objet des figures 4a à 4c.

Les fourches réalisées conformément à l'invention présentent de très nombreux avantages par rapport aux solutions antérieures, notamment par le fait qu'elles éliminent toute opération d'assemblage entre les fourreaux, la tête de fourche et le pivot. Par ailleurs, elles présentent de très bonnes caractéristiques aux contraintes de flexion/cisaillement ainsi qu'une très bonne tenue à la fatigue.

## Revendications

1. Fourche de bicyclette ou article similaire comportant deux branches reliées à un tronc commun, à base d'une résine renforcée par une armature textile, disposée autour d'un noyau préalablement formé, ayant la configuration de la fourche à réaliser et des dimensions légèrement inférieures à celle-ci pour tenir compte de l'épaisseur des renforts qui seront disposés autour de ce noyau, cette armature étant constituée d'une superposition de gaines tressées, caractérisée en ce que:
- ladite fourche se présente sous la forme d'un ensemble moulé en une seule pièce formant le pivot (7), la tête de fourche (8) ainsi que les deux fourreaux (6a, 6b);
- des fils longitudinaux (10) sont emprisonnés entre les gaines tressées disposées autour du noyau, ces fils s'étendant parallèlement aux génératrices de ladite fourche et étant répartis régulièrement sur toute la périphérie du noyau définissant la fourche et ce, aussi bien autour des fourreaux (6a, 6b) qu'autour de la tête de fourche (8) que du pivot de direction (7).

2. Fourche de bicyclette selon la revendication 1, caractérisée en ce que le noyau (11) constituant ladite fourche est monobloc.

3. Fourche de bicyclette selon la revendication 1, caractérisée par le fait que le noyau (11) est constitué de deux demi-noyaux (11a, 11b) correspondant chacun à une demi-fourche, les renforts textiles étant disposés non seulement sur la périphérie desdits noyaux mais également le long de la jonction entre les deux demi-noyaux, ce qui crée une cloison interne.

4. Fourche de bicyclette selon la revendication 3, caractérisée par le fait que les deux demi-noyaux (11a, 11b) correspondent chacun à une demi-fourche en passant par le plan de symétrie de l'axe du pivot (7).

5. Fourche de bicyclette selon la revendication 3, caractérisée par le fait que les deux demi-noyaux (11a, 11b) correspondent chacun à une demi-fourche obtenue par découpe selon un plan transversal divisant les fourreaux (6a, 6b), la tête (7) et le pivot (8) en deux parties complémentaires.

6. Procédé pour la réalisation d'une fourche selon l'une des revendications 1 à 5, qui consiste à recouvrir un noyau préalablement formé, ayant la configuration de la fourche à réaliser et des dimensions légèrement inférieures à celle-ci pour tenir compte de l'épaisseur des renforts qui seront disposés autour de ce noyau, renforts constitués de tresses unidirectionnelles et bidirectionnelles préalablement fabriquées, caractérisé en ce que la mise en place desdites tresses autour du noyau est réalisée de telle sorte:
- qu'elles recouvrent non seulement la tête de fourche (8) mais également qu'elles remontent sur au moins une partie de la hauteur du pivot (7);
- qu'elles emprisonnent, aussi bien les fourreaux (6a, 6b) que la tête de fourche (8) et le pivot de direction (7);
- qu'après mise en place des différentes tresses de renforcement le long des fourreaux (6a, 6b), de la tête (8) et du pivot (7), ce dernier soit recouvert d'un manchon (16) emprisonnant l'ensemble des couches préalablement disposées autour du noyau.

7. Procédé selon la revendication 6, caractérisé par le fait que le noyau est monobloc, les fils longitudinaux (10) qui recouvrent le pivot (7), la tête de fourche et l'amorce des fourreaux (6a, 6b) étant préalablement disposés autour de ces zones et étant maintenus plaqués contre le noyau par au moins une couche de tresses bidirectionnelles (12), les branches (6a, 6b) étant alors réalisées, également au moyen de tresses bi et unidirectionnelles en prenant soin de faire remonter leurs extrémités le long de la tête (8) et d'une partie de la hauteur du pivot (7) de telle sorte qu'elles se recouvrent mutuellement dans la zone de jonction (14) en-dessous de la tête.

8. Procédé selon la revendication 7, caractérisé par le fait que le noyau (11) est constitué de deux demi-noyaux (11a, 11b) correspondant chacun à une demi-fourche coupée soit selon le plan de symétrie X passant par l'axe du pivot, soit une demi-fourche coupée selon un plan transversal Y passant à la fois sur l'axe du pivot et par un plan commun aux deux branches (6a, 6b), les différentes couches de renfort textile constituées de tresses unidirectionnelles ou bidirectionnelles étant, dans un premier temps, disposées autour de chacun des deux demi-noyaux (11a, 11b) puis, les deux demi-noyaux ainsi revêtus étant alors juxtaposés pour être à nouveau recouverts d'une succession de couches unidirectionnelles et bidirectionnelles qui non seulement, assurent le maintien des deux demi-noyaux lors de l'opération de moulage proprement dite, mais également forment une cloison interne renforçant ladite fourche.

## Patentansprüche

1. Fahrradgabel oder ähnlicher Gegenstand, mit zwei Armen, die an einem gemeinsamen Schaft befestigt sind, auf Basis eines mit textiler Einlage verstärkten Harzes, das um einen vorgefertigten Kern angeordnet ist, der die Gestalt der zu bildenden Gabel aufweist und der etwas geringere Maße als diese aufweist, um der Dicke der Verstärkungen Rechnung zu tragen, die um den Kern angeordnet werden sollen, wobei die Einlage durch ein Übereinanderlegen von Geflechtummantelungen gebildet ist, dadurch gekennzeichnet,
– daß die Gabel die Form eines zu einem einzigen Stück geformten Zusammenbaus aufweist, das den Schaft (7), den Gabelkopf (8) und auch die beiden Scheiden (6a, 6b) bildet;
– daß längsverlaufende Fäden (10) zwischen den um den Kern angeordneten Geflechtummantelungen eingeschlossen sind, wobei sich die Fäden parallel zu den Mantellinien der Gabel erstrecken und diese regelmäßig auf der gesamten Umfangsfläche des die Gabel bestimmenden Kerns verteilt sind und wobei dies um die Scheiden (6a, 6b), um den Gabelkopf (8) als auch um den Lenkschaft (7) der Fall ist.

2. Fahrradgabel nach Anspruch 1, dadurch gekennzeichnet, daß der die Gabel bildende Kern (11) einstückig ist.

3. Fahrradgabel nach Anspruch 1, dadurch gekennzeichnet, daß der Kern (11) aus zwei Halbkernen (11a, 11b) besteht, von denen jeder einer Halbgabel entspricht, wobei die textilen Verstärkungen nicht nur um die Umfangsflächen der Kerne angeordnet sind, sondern gleichermaßen längs der Verbindungsstelle zwischen den beiden Halbkernen, wodurch eine innere Zwischenschicht gebildet wird.

4. Fahrradgabel nach Anspruch 3, dadurch gekennzeichnet, daß die beiden Halbkerne (11a, 11b) jeweils einer Halbgabel beidseits der Symmetrieebene der Achse des Schafts (7) entsprechen.

5. Fahrradgabel nach Anspruch 3, dadurch gekennzeichnet, daß die beiden Halbkerne (11a, 11b) je-

weils einer Halbgabel entsprechen, die durch Schneiden längs einer transversalen Ebene erhalten wird, die die Scheiden (6a, 6b), den Kopf (7) und den Schaft (8) in zwei komplementäre Teile auftrennt.

6. Verfahren zum Herstellen einer Gabel nach einem der Ansprüche 1 bis 5, bei dem ein vorgeformter Kern bedeckt wird, der die Gestalt der zu bildenden Gabel aufweist und dessen Maße geringfügig geringer sind als diese, um der Dicke der Verstärkungen Rechnung zu tragen, die um den Kern angeordnet werden sollen, wobei die Verstärkungen aus vorgefertigten, in einer oder in zwei Richtungen verlaufenden Flechtwerken gebildet werden, dadurch gekennzeichnet, daß das Anlegen der Flechtwerke um den Kern derart durchgeführt wird,
– daß diese nicht nur den Gabelkopf (8) bedecken, sondern daß sie gleichermaßen sich zumindest über ein Teil der Höhe des Schaftes (7) erheben;
– daß sie gleichermaßen die Arme (6a, 6b), den Gabelkopf (8) und den Lenkschaft (7) einschließen;
– daß, nachdem die verschiedenen Verstärkungsflechtwerke längs der Scheiden (6a, 6b), des Kopfes (8) und des Schaftes (7) an Ort und Stelle gebracht wurden, der letztere mit einer Überschiebemuffe (16) bedeckt wird, die den Zusammenbau der zuvor um den Kern gelegten Schichten umschließt.

7. Verfahren nach Anspruch 6, dadurch gekennzeichnet, daß der Kern einstückig ist, daß die längsverlaufenden Fäden (10), die den Schaft (7), den Gabelkopf und den Anfangsbereich der Scheiden (6a, 6b) bedecken, zunächst um diese Bereiche angeordnet werden und schichtartig am Kern durch zumindest eine in zwei Richtungen gerichtete Flechtwerkschicht (12) gehalten werden, daß die Scheiden (6a, 6b) anschließend hergestellt werden, und zwar gleichermaßen mittels in einer oder in zwei Richtungen verlaufenden Flechtwerkes, wobei Sorge dafür getragen wird, daß dessen äußere Enden sich längs des Kopfes (8) und eines Teils der Höhe des Schaftes (7) derart erheben, daß sie sich gegenseitig im Verbindungsbereich (14) unterhalb des Kopfes überdecken.

8. Verfahren nach Anspruch 7, dadurch gekennzeichnet, daß der Kern (11) durch zwei Halbkerne (11a, 11b) gebildet wird, von denen jeder einer Halbgabel entspricht, die, entweder längs einer Symmetrieebene X geschnitten wurde, die durch die Schaftachse verläuft oder die längs einer transversalen Ebene Y geschnitten wurde, die zunächst längs der Achse des Schaftes und dann durch eine gemeinsame Ebene der beiden Scheiden (6a, 6b) verläuft, wobei die verschiedenen textilen Verstärkungsschichten, die aus in einer oder in zwei Richtungen verlaufenden Flechtwerken gebildet werden, zunächst um jede der beiden Halbkerne (11a, 11b) angeordnet werden, daß anschließend die beiden derart bedeckten Halbkerne aufeinandergelegt werden, damit sie erneut mit einer Reihe von in einer oder in zwei Richtungen gerichteten Schichten bedeckt werden können, die nicht nur dafür sorgen sollen, die beiden Halbkerne während des Formgebungsvorganges zu halten, sondern die gleichermaßen eine innere Zwischenschicht bilden, die die Gabel verstärkt.

# Claims

1. Bicycle fork or similar article comprising two branches connected to a common trunk, based on a resin reinforced by a textile structure arranged around a preformed core having the configuration of the fork to be produced and dimensions which are slightly smaller than the latter in order to take into account the thickness of the reinforcements which will be arranged around this core, this structure consisting of superposed braided sheaths, characterized in that:
- the said fork has the form of a one-piece moulded assembly forming the pivot (7), the fork head (8) as well as the two fork ends (6a, 6b);
- longitudinal threads (10) are enclosed between the braided sheaths arranged around the core, these threads extending parallel to the generatrices of the said fork and being distributed uniformly on the entire periphery of the core defining the fork that is to say around the fork ends (6a, 6b) and also around the fork head (8) and the steering pivot (7).

2. Bicycle fork according to claim 1, characterized in that the core (11) forming the said fork is made in a single piece.

3. Bicycle fork according to claim 1, characterized in that the core (11) consists of two half-cores (11a, 11b) each corresponding to a half-fork, the textile reinforcements being arranged not only on the periphery of the said cores but also along the junction between the two half-cores, thus creating an internal partition.

4. Bicycle fork according to claim 3, characterized in that the two half-cores (11a, 11b) each correspond to a half-fork passing through the plane of symmetry of the axis of the pivot (7).

5. Bicycle fork according to claim 3, characterized in that the two half-cores (11a, 11b) each correspond to a half-fork obtained by cutting along a transverse plane dividing the fork ends (6a, 6b), the head (7) and the pivot (8) in two complementary parts.

6. Process for the production of a fork according to one of claims 1 to 5, which consists in covering a preformed core having the configuration of the fork to be produced and dimensions slightly smaller than the latter in order to take into account the thickness of the reinforcements which will be arranged around this core, which reinforcements consist of unidirectional and twodirectional previously manufactured braidings, characterized in that the positioning of the said braidings around the core is performed such that:
- they cover not only the fork head (8) but also extend up over at least part of the height of the pivot (7);
- they enclose the fork ends (6a, 6b), and also the fork head (8) and the steering pivot (7);
- after positioning of the various reinforcement braidings along the fork ends (6a, 6b), the head (8) and the pivot (7), the latter is covered with a sleeve (16) enclosing all the layers previously arranged around the core.

7. Process according to claim 6, characterized in that the core is made in a single piece, the longitudinal threads (10) which cover the pivot (7), the fork head and the top of the fork ends (6a, 6b) being previously arranged around these zones and being held against the core by at least one layer of two-directional braidings (12), the branches (6a, 6b) then being produced also by means of two- and unidirectional braidings, ensuring that their ends extend up along the head (8) and part of the height of the pivot (7) such that they overlap in the junction zone (14) below the head.

8. Process according to claim 7, characterized in that the core (11) consists of two half-cores (11a, 11b) each corresponding to a half-fork cut either along the plane of symmetry X passing through the axis of the pivot, or a half-fork cut along a transverse plane Y passing both over the axis of the pivot and through a plane common to the two branches (6a, 6b), the various layers of textile reinforcement consisting of unidirectional or two-directional braidings being, firstly, arranged around each of the two half-cores (11a, 11b), followed by the two half-cores thereby covered then being juxtaposed in order to be covered again with a series of unidirectional and two-directional layers which not only hold the two half-cores during the actual moulding operation but also form an internal partition reinforcing the said fork.

FIG.1

FIG.2

FIG.3a

FIG.3b

FIG.3c

FIG.3d

FIG.3e

FIG.4c

FIG.4b

FIG.4a

EP 0 230 839 B1

FIG.5